# EUROPEAN PATENT APPLICATION

(11) **EP 2 273 747 A1**
(43) Date of publication of application: **12.01.2011**
(21) Application number: 09290513.2
(22) Date of filing: 30.06.2009
(51) Int. Cl.: H04L 29/06, H04W 8/26, H04W 80/04

(54) **Communication of IPv6 packets across a mobile network supporting IPv4**

(71) Applicant: Alcatel Lucent, 75008 Paris (FR)
(72) Inventor: Melia, Telemaco, 91620 Nozay (FR); Mongazon-Cazavet, Bruno, 91620 Nozay (FR)
(74) Representative: Thibaud, Jean-Baptiste

(57) **Abstract**

A method facilitates communication of next generation Internet protocol packets across a mobile network (100) supporting a previous generation Internet protocol. The method comprises receiving at a previous generation home agent (91) an intergeneration relay assignment request for assigning an intergeneration relay to a mobile node, and sending an intergeneration relay assignment response to the mobile node (83, 84), the response comprising a previous generation address of an intergeneration relay (92, 93) assigned to the mobile node, the intergeneration relay supporting an intergeneration address conversion method to encapsulate a next generation Internet protocol packet inside a previous generation Internet protocol packet and to derive an outer previous generation Internet protocol address from an inner next generation Internet protocol address.

## Description

### Field of the invention

The invention relates generally to supporting communications of next generation Internet protocol packets via a mobile network that ordinarily uses a previous generation Internet protocol.

### Background of the invention

The limited size and structure of the Internet address space of previous generation Internet protocol (IP version 4) has caused difficulties in coping with the explosive increase in the number of Internet users. Next generation Internet protocol (IP version 6) is a feasible solution for the problems identified with IP version 4. Efficient interworking between IP version 4 and IP version 6 is very important, because IP version 4 networks and services will exist for quite a long time. The transition period will be lengthy, and network/terminal equipment supporting both IP versions will be needed during the transition period.

Various proposals have been made to enable a dual stack mobile device to send and receive next generation Internet protocol packets via a previous generation mobile infrastructure using IP version 6 over IP version 4 tunneling techniques. However, those proposals have led to the constraint that an IP version 6 over IP version 4 tunnel must end at an interface of the home agent that anchors the mobile device.

### Summary of the invention

In an embodiment, the invention provides a method for facilitating communication of next generation Internet protocol packets across a mobile network supporting a previous generation Internet protocol, the method comprising:
receiving at a previous generation home agent an intergeneration relay assignment request for assigning an intergeneration relay to a mobile node,
sending an intergeneration relay assignment response to the mobile node, the response comprising a previous generation address of an intergeneration relay assigned to the mobile node, the intergeneration relay supporting an intergeneration address conversion method.

Various embodiments of such method may also comprise one or more of the following steps:
- selecting the assigned intergeneration relay among a collection of intergeneration relays adapted to communicate with the previous generation home agent using the previous generation Internet protocol.
- determining respective loads of a plurality of the intergeneration relays and selecting the assigned intergeneration relay as a function of the respective loads. In an embodiment, the home agent determines the respective load of a given intergeneration relay as a function of a number of mobile nodes to which the intergeneration relay is assigned.
- assigning the intergeneration relay as a function of an intergeneration address conversion method identifier contained in the intergeneration relay assignment request.
- selecting an intergeneration relay supporting a first intergeneration address conversion method when the intergeneration relay assignment request comprises a first intergeneration address conversion method identifier and selecting an intergeneration relay supporting a second intergeneration address conversion method when the intergeneration relay assignment request comprises a second intergeneration address conversion method identifier.
- selecting the intergeneration address conversion method in a group comprising a 6to4 method and an ISATAP method. In that case, the intergeneration relay may comprise at least one of a 6to4 router and an ISATAP router.
- looking up stored subscription data associated to the mobile node in response to receiving the intergeneration relay assignment request and performing subscription-based assignment of the intergeneration relay. Subscription-based assignment may take various forms. In an embodiment, the home agent selects the assigned intergeneration relay among a collection of intergeneration relays as a function of the stored subscription data e.g. to assign different intergeneration relays to users having subscribed different tariff options. In an embodiment, the stored subscription data comprises an intergeneration communication option, the method further comprising granting or refusing the intergeneration relay assignment request as a function of the intergeneration communication option associated to the mobile node.
- receiving the intergeneration relay assignment request in a mobile node registration request of a previous generation mobility protocol and/or sending the intergeneration relay assignment response in a mobile node registration response of the previous generation mobility protocol. In embodiments, the previous generation mobility protocol may comprise Mobile Internet Protocol version 4 or Proxy Mobile Internet Protocol version 4.
- storing an association between the mobile node and the assigned intergeneration relay. In embodiments, such association may be used by the previous generation home agent for various purposes such as determining intergeneration relay loads or security measures e.g. packet filtering.

Preferred embodiments of the invention also provide a digital data storage medium encoding a machine-executable program of instructions that, when executed, performs a method comprising receiving at a previous generation home agent an intergeneration relay assignment request for assigning an intergeneration relay to a mobile node, and sending an intergeneration relay assignment response to the mobile node, the response comprising a previous generation address of an intergeneration relay assigned to the mobile node, the intergeneration relay supporting an intergeneration address conversion method. In an embodiment, a previous generation home agent is implemented as a computer programmed with such machine-executable program.

According to an embodiment, the invention provides also a method for enabling a mobile node to communicate next generation Internet protocol packets across a mobile network supporting a previous generation Internet protocol, the method comprising:
providing a mobile node supporting an intergeneration address conversion method,
sending an intergeneration relay assignment request to a previous generation home agent for assigning an intergeneration relay to the mobile node,
receiving an intergeneration relay assignment response, the response comprising a previous generation address of an intergeneration relay assigned to the mobile node, the intergeneration relay supporting the intergeneration address conversion method, deriving a next generation address of the mobile node from a previous generation home address assigned to the mobile node using the intergeneration address conversion method,
encapsulating a next generation packet comprising the next generation address of the mobile node inside a previous generation packet, and
sending the previous generation packet to the intergeneration relay previous generation address.

Various embodiments of such method may also comprise one or more of the following steps:
- determining an intergeneration address conversion method supported by the mobile node and providing a corresponding intergeneration address conversion method identifier in the intergeneration relay assignment request.
- sending the intergeneration relay assignment request in a mobile node registration request of a previous generation mobility protocol and/or receiving the intergeneration relay assignment response in a mobile node registration response of the previous generation mobility protocol.

Preferred embodiments of the invention also provide a digital data storage medium encoding a machine-executable program of instructions that, when executed, performs a method comprising:
sending an intergeneration relay assignment request to a previous generation home agent for assigning an intergeneration relay to the mobile node,
receiving an intergeneration relay assignment response, the response comprising a previous generation address of an intergeneration relay assigned to the mobile node, the intergeneration relay supporting an intergeneration address conversion method, deriving a next generation address of the mobile node from a previous generation home address assigned to the mobile node using the intergeneration address conversion method,
encapsulating a next generation packet comprising the next generation address of the mobile node inside a previous generation packet, and
sending the previous generation packet to the intergeneration relay previous generation address. In an embodiment, a dual stack mobile node is implemented as a computer programmed with such machine-executable program.

An idea at the basis of the invention is that putting some flexibility into associations between mobile nodes and one or more intergeneration relays connected to their home network can provide some benefits in terms of network efficiency, end-user service and/or ease of deployment. Another idea at the basis of the invention is that a home agent is in a good position to manage such associations as it generally knows profiles of the mobile nodes and routes most or all the data traffic to and from the mobile nodes.

### Brief description of the drawings

These and other aspects of the invention will be apparent from and elucidated with reference to the embodiments described hereinafter, by way of example, with reference to the drawings.
Figure 1 is a high level diagrammatic representation of a mobile communications system in which embodiments of the invention may be used,
Figure 2 is a call-flow diagram of a signaling procedure that may be implemented in the system of Figure 1,
Figure 3 is a call-flow diagram of another signaling procedure that may be implemented in the system of Figure 1,
Figure 4 shows an embodiment of a protocol extension that may be used in the signaling procedure of Figure 2 or 3.
Figure 5 shows a flowchart of an embodiment of a method for assigning an intergeneration relay to a mobile node.

### Detailed description of the preferred embodiments

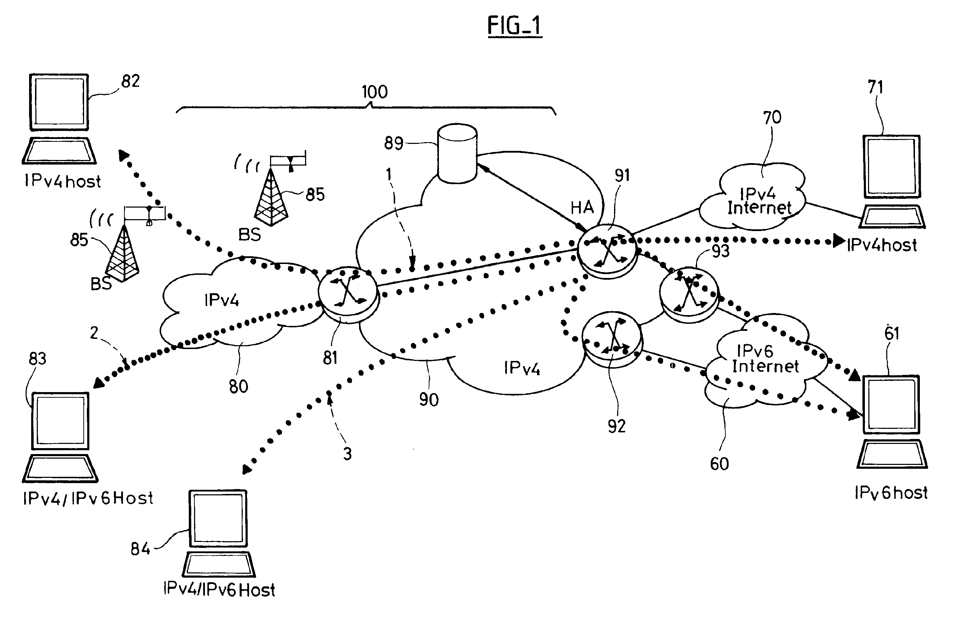

With reference to Figure 1, a mobile communications infrastructure 100 which uses the Internet protocol version 4 is schematically shown. The infrastructure 100 typically comprises a home network 90, a home agent 91 in the home network, a foreign network 80 in which mobile nodes 82, 83 and 84 that are anchored at the home agent 91 may be roaming, an access router 81 in the foreign network to provide IP connectivity to the mobile nodes and base stations 85 to establish radio links with the terminals. The infrastructure 100 and the mobile nodes 82, 83, 84 execute an IP version 4 mobility protocol such as Mobile IP version 4 or Proxy Mobile IP version 4 to maintain IP version 4 connectivity while the mobile nodes may attach to various access points within the infrastructure. Using the IP version 4 protocol, the mobile nodes may communicate with IP version 4 correspondent nodes attached to the infrastructure 100 or located in a external public or private networks, e.g. the Internet version 4 70. Such a communication is schematically indicated by double arrow 1 between mobile node 82 and correspondent node 71 on Figure 1.

Those skilled in the art of mobile communications understand at once that the mobile communications infrastructure 100 may comprise various other elements that interoperate compatibly with the mobile nodes and require no further explanation here.

When dual stack hosts are used in the infrastructure 100, such as mobile nodes 83 and 84 on Figure 1, IP version 6 connectivity may be emulated between the dual stack mobile nodes and an IP version 6 correspondent nodes 61 located in a external public or private networks, e.g. an IPv6 island or the Internet version 6 60. Such a communication is schematically indicated by double arrows 2 and 3 on Figure 1. One or more intergeneration relays connected to the home agent 91, such as intergeneration relays 92 and 93 on Figure 1, are used to emulate IP version 6 connectivity via the infrastructure 100.

An intergeneration relay refers to a network element that supports an intergeneration address conversion method to derive an IP version 6 address from a IP version 4 address or to reversely derive the IP version 4 address from the IP version 6 address and that uses the conversion method to encapsulate IP version 6 packets inside version 4 packets to relay incoming IP version 6 traffic into the infrastructure 100. Well-known intergeneration address conversion methods are used in the 6to4 tunneling protocol (IETF RFC 3056) and in the ISATAP tunneling protocol (IETF RFC 4214).

Both 6to4 relays and ISATAP relays encapsulate an IP version 6 packet within an IP version 4 header. However, they send the packet across an IP version 4 infrastructure in different ways. 6to4 uses the IP version 6 prefix. 6to4 uses a public IP version 4 address to create the 64-bit subnet identifier portion for an IP version 6 address. For example, 131.107.71.152 becomes 2002:836B:4798::/48. ISATAP uses the IP version 6 interface identifier. ISATAP uses a locally assigned IP version 4 address, public or private, to create a 64-bit interface identifier. For example, 172.31.71.152 becomes ::0:5EFE:172.31.71.152. In both cases, IP version 4 addresses that are embedded in portions of the IP version 6 address provide the information to determine the source or destination addresses in the encapsulating IP version 4 header.

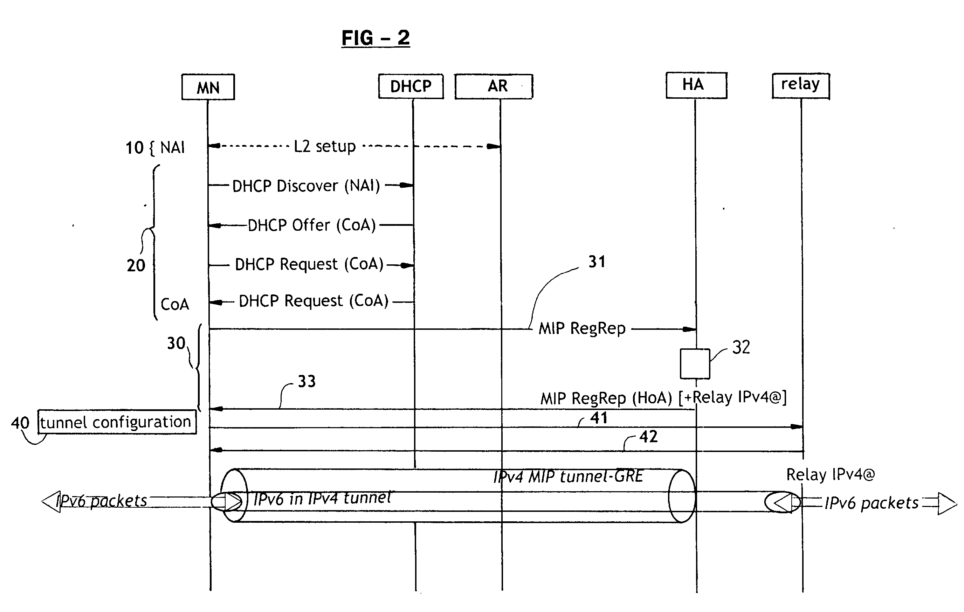

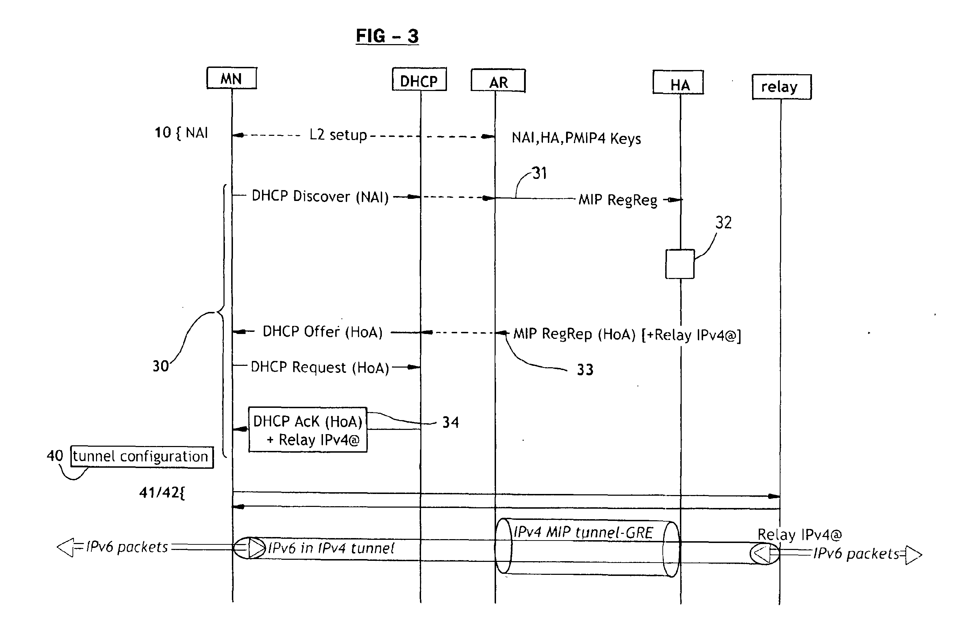

To enable a dual stack mobile node such as mobile node 83 or 84 to communicate through an intergeneration relay such as intergeneration relay 92 or 93, some configuration data is needed at the mobile node. Signaling procedures that can be used to obtain such configuration data from an IP version 4 home agent will now be described with reference to Figures 2 and 3.

Figure 2 refers to an embodiment of a mobile communications system based on Mobile IP version 4. MN denotes a dual stack mobile node, such as mobile node 83 or 84 of Figure 1. AR denotes an access router serving the mobile node, such as access router 81. HA denotes the home agent of the mobile node, such as home agent 91. Relay refers to an intergeneration relay, such as intergeneration relay 92 or 93. NAI denotes a network access identifier of the mobile node, e.g. as defined in RFC 4282. CoA denotes a care-of address assigned to the mobile node. HoA denotes a home address assigned to the mobile node. DHCP denotes a Dynamic Host Configuration Protocol server that may be co-located with the access router.

Figure 2 is a call-flow diagram of a signaling procedure that may take place upon network entry of the mobile node. At step 10, the MN sets up a layer 2 link with the AR in accordance with well-known procedures. At step 20, the MN obtains a IP version 4 care-of address in accordance with well-understood procedures, e.g. using DHCP. At step 30, the MN performs a Mobile IP signaling procedure with the HA to register the CoA with the HA and to obtain a home address if it does not have one. More precisely, the MN sends a Mobile IP registration request 31 to the HA and receives a Mobile IP registration response 33 from the HA.

In addition to conventional MIP protocol objects, the Mobile IP registration request 31 comprises an indication that an intergeneration relay address is requested by the MN to configure an IP version 6 over IP version 4 tunnel. At step 32, the HA reacts to that indication by performing an intergeneration relay selection step. If successful, the intergeneration relay selection step 32 results in an intergeneration relay being assigned to the MN by the HA. Then, the HA inserts an IP version 4 address of the assigned intergeneration relay in the Mobile IP registration response 33.

At step 40, the MN uses the home address assigned by the home agent (or otherwise provided) to configure an IP version 6 over IP version 4 tunnel with the assigned intergeneration relay. In particular, the MN derives an IP version 6 address (HoAv6) from the IP version 4 home address (HoAv4) using a conversion method that it shares with the assigned intergeneration relay. The bottom of Figure 2 schematically shows the tunnels through which the MN may exchange IP version 6 packets with IP version 6 correspondent nodes. In this example, a double layer of encapsulation is used between the MN and the HA and a single layer of encapsulation between the HA and intergeneration relay. The HA does not have to support IP version 6.

For example, using a 6to4 method, the MN derives an IP version 6 subnet identifier from the HoA and concatenates the subnet identifier with any suitable interface identifier to obtain the IP version 6 address. Using an ISATAP method, the MN derives an IP version 6 interface identifier from the HoA and obtains a subnet identifier from the assigned intergeneration relay to complete the IP version 6 address. In an ISATAP embodiment, the MN may send an IP version 4 encapsulated Router Solicitation message 41 to the assigned ISATAP relay and receive an IP version 4 encapsulated unicast Router Advertisement message 42 from the assigned ISATAP relay to obtain the subnet identifier. The IP version 6 prefix returned by the ISATAP relay may be a site prefix, i.e. an IP version 6 prefix to be used by all ISATAP hosts connected to this ISATAP relay.

Figure 3 refers to an embodiment of a mobile communications system based on Proxy Mobile IP version 4. Elements that are identical or similar to those of Figure 2 are denoted by the same reference numeral. Proxy Mobile IP differs from Mobile IP in that the Mobile IP version 4 signaling at step 30 is exchanged between the home agent and the access router, which is also referred to as Proxy Mobility Agent in this case. The MN eventually receives the address of the assigned intergeneration relay encoded as part of a DHCP version 4 message 34. The bottom of Figure 3 schematically shows the tunnels through which the MN may exchange IP version 6 packets with IP version 6 correspondent nodes (CN). In this example, a double layer of encapsulation is used only between the HA and the AR where the Mobile IP tunnel ends. More details on Proxy Mobile IP version 4 can be found in the Internet draft draft-leung-mip4-proxy-mode-10. Again, the HA does not have to support IP version 6 in this embodiment.

In an embodiment where the assigned intergeneration relay is a 6to4 router, the tunneling of packets can be implemented as follows. To send a packet to an IP version 6 CN, the MN operates as ingress 6to4 router. The MN generates an IP version 6 packet (SRC=HoAv6) and encapsulates the IP version 6 packet into an IP version 4 packet (SRC=HoAv4, DST=Relay IPv4). The IP version 4 packet reaches the HA through conventional MIP/PMIP tunneling, unless reverse tunneling is disabled. The HA routes the IP version 4 packet to the destination intergeneration relay through conventional IP version 4 routing. The 6to4 router identifies the packet as 6to4 packet and de-encapsulates the IP version 6 packet. The IP version 6 packet may then be routed to the CN through conventional IP version 6 routing.

To send an IP version 6 packet to the MN, an IP version 6 host sets the destination address to DST=HoAv6. The IP version 6 packet reaches an ingress 6to4 router through conventional IP version 6 routing. The ingress 6to4 router may or may not be the intergeneration relay assigned to the MN, depending on prefix advertisement policies implemented in the IP version 6 network. The ingress 6to4 router identifies HoAv6 as 6to4 type address and encapsulates the IP version 6 packet into an IP version 4 packet where the destination address is set to DST=HoAv4, which the router derived from HoAv6. In other words, the resulting packet has an outer previous generation Internet protocol address which is derived from an inner next generation Internet protocol address. The IP version 4 packet reaches the HA by conventional routing as HoAv4 is on the home network and reaches the MN through conventional MIP/PMIPv4 tunneling. The MN de-encapsulates the IP version 6 packet.

In an embodiment where the assigned intergeneration relay is an ISATAP router, the tunneling of packets can be implemented as follows. To send a packet to an IP version 6 CN, the MN operates as ingress ISATAP endpoint. The MN generates an IP version 6 packet (SRC=HoAv6) and encapsulates the IP version 6 packet into an IP version 4 packet (SRC=HoAv4, DST=Relay IPv4). The IP version 4 packet reaches the HA through conventional MIP/PMIP tunneling, unless reverse tunneling is disabled. The HA routes the IP version 4 packet to the destination intergeneration relay through conventional IP version 4 routing. The ISATAP router identifies the packet as ISATAP packet and de-encapsulates the IP version 6 packet. The IP version 6 packet may then be routed to the CN through conventional IP version 6 routing.

To send an IP version 6 packet to the MN, an IP version 6 host sets the destination address to DST=HoAv6. The IP version 6 packet reaches the ISATAP router (same as above) through conventional IP version 6 routing because the site subnet identifier is advertised in the IP version 6 network. The ISATAP router identifies HoAv6 as an ISATAP address and encapsulates the IP version 6 packet into an IP version 4 packet where the destination address is set to DST=HoAv4, which the router derived from HoAv6. The IP version 4 packet reaches the HA by conventional routing as HoAv4 is on the home network and reaches the MN through conventional MIP/PMIPv4 tunneling. The MN de-encapsulates the IP version 6 packet.

In the embodiments of Figures 2 and 3, Mobile IP signaling is extended to implement an intergeneration relay assignment request and response. Implementing an intergeneration relay assignment request and response as an option in Mobile IP messages contributes to limit protocol overhead. However, in a modified embodiment, such request and response could be exchanged in any other messages using any other suitable protocols.

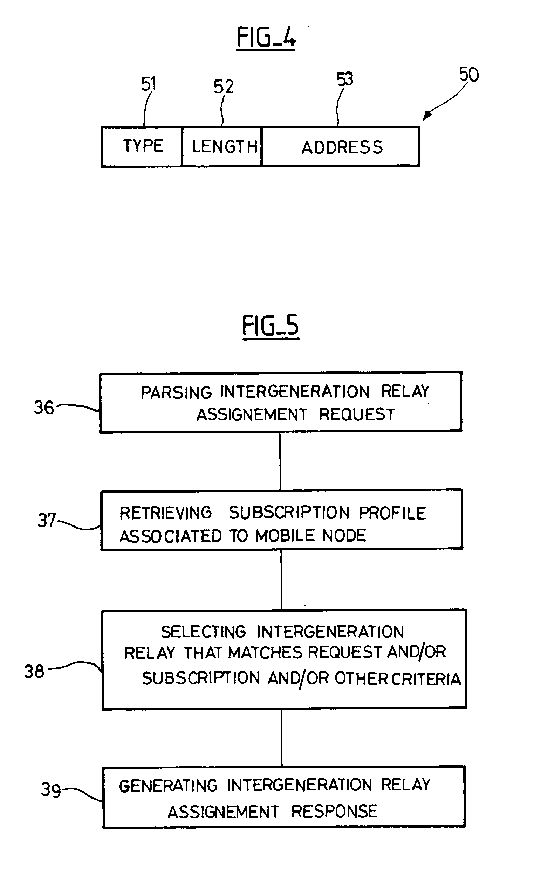

Figure 4 shows an intergeneration relay object 50 that may be used to implement an intergeneration relay assignment request or response, e.g. as vendor specific extensions in Mobile IP messages. The object 50 comprise a Type field 51, a Length field 52 and an address field 53. Type field 51 specifies a type of the intergeneration relay an address of which is requested or provided in field 53. For example, a first predefined value is used to specify 6to4 type and a second predefined value is used to specify ISATAP type. Length field 52 specifies a size of the object in bytes. For example, a first predefined value is used to specify that no address is provided and a second, higher predefined value is used to specify that an address is provided. Address field 53 contains the IP version 4 address of the intergeneration relay, if any.

In order to assign intergeneration relays to mobile nodes that request such assignment, the home agent may comprise a configuration file or similar data structures that define a collection of assignable intergeneration relays and their respective features, e.g. supported intergeneration conversion methods, processing capacity, etc. Although Figure 1 shows only two such relays 92 and 93, this is merely for the purpose of illustration. A single HA can operate with several relays of different types and/or several relays of a same type for one or more given types. For example, if several ISATAP routers are assignable, MN assigned different ISATAP routers will appear as different IP version 6 subnets to CNs.

A flexible home agent-based assignment of intergeneration relays to dual stack mobile nodes can be effected for different purposes, such as subscription-based user service differentiation and/or load balancing. Figure 5 is a flow diagram of an embodiment of a method for assigning an intergeneration relay to a mobile node that may be performed by a programmed module in the home agent 91 , e.g. at step 32.

At step 36, a intergeneration relay assignment request, e.g. comprising a Mobile IP Registration request with an object 50 or a message having a different format, is parsed. For example, a requested type of the intergeneration relay is determined, e.g. based on field 51.

At step 37 a subscription profile associated to the mobile node from which the request originates is retrieved, e.g. using the mobile node NAI. For example, the subscription profile data is accessed in a data repository 89 provided within the mobile infrastructure 100.

At step 38 an intergeneration relay is selected among a collection of assignable relays as a function of the retrieved profile, parameter values in the request and/or other criteria. Other criteria include for example a load or an available capacity of the intergeneration relay.

At step 39 an intergeneration relay assignment response comprising an IP version 4 address of the selected intergeneration relay is generated under a format suitable for direct or indirect transmission to the mobile node, e.g. as an object 50 within a Mobile IP Registration response.

In embodiments, the subscription profiles of the mobile infrastructure subscribers comprise various fee-based options, e.g. an intergeneration communication option, that may or may not be activated. Thus it is possible to restrict the use of certain intergeneration relays to selected subscribers. To enforce such restrictions, the intergeneration communication service should not be made available to the mobile nodes through other means, e.g. corresponding ISATAP routers should not be recorded in Domain Name Servers.

Network elements such as mobile nodes and home agents are well-known in the art and often comprise a fully or at least partially programmable platform that can be readily configured to implement the above described processes and methods. Some steps of the above described processes and methods may be performed simultaneously or in a different order.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A method for facilitating communication of next generation Internet protocol packets across a mobile network (100) supporting a previous generation Internet protocol, the method comprising:
receiving at a previous generation home agent (91) an intergeneration relay assignment request for assigning an intergeneration relay to a mobile node,
sending an intergeneration relay assignment response to the mobile node, the response comprising a previous generation address of an intergeneration relay (92) assigned to the mobile node (84), the intergeneration relay supporting an intergeneration address conversion method.

2. A method in accordance with claim 1, further comprising selecting (32) the assigned intergeneration relay among a collection of intergeneration relays (92, 93) adapted to communicate with the previous generation home agent using the previous generation Internet protocol.

3. A method in accordance with claim 2, further comprising determining respective loads of a plurality of the intergeneration relays and selecting the assigned intergeneration relay as a function of the respective loads.

4. A method in accordance with any one of claims 1 to 3, further comprising assigning the intergeneration relay as a function of an intergeneration address conversion method identifier (51) contained in the intergeneration relay assignment request.

5. A method in accordance with any one of claims 1 to 4, further comprising selecting an intergeneration relay supporting a first intergeneration address conversion method when the intergeneration relay assignment request comprises a first intergeneration address conversion method identifier and selecting an intergeneration relay supporting a second intergeneration address conversion method when the intergeneration relay assignment request comprises a second intergeneration address conversion method identifier.

6. A method in accordance with any one of claims 1 to 5, wherein the intergeneration address conversion method is selected in a group comprising a 6to4 method and an ISATAP method.

7. A method in accordance with any one of claims 1 to 6, further comprising looking up (37) stored subscription data associated to the mobile node in response to receiving the intergeneration relay assignment request and performing subscription-based assignment of the intergeneration relay.

8. A method in accordance with claim 7, wherein the stored subscription data comprises an intergeneration communication option, the method further comprising accepting or refusing the intergeneration relay assignment request as a function of the intergeneration communication option associated to the mobile node.

9. A method in accordance with any one of claims 1 to 8, wherein the intergeneration relay assignment request is received in a mobile node registration request (31) of a previous generation mobility protocol and the intergeneration relay assignment response is sent in a mobile node registration response (33) of the previous generation mobility protocol.

10. A method in accordance with claim 9, wherein the previous generation mobility protocol is selected in a group comprising Mobile Internet Protocol version 4 and Proxy Mobile Internet Protocol version 4.

11. A digital data storage medium encoding a machine-executable program of instructions that, when executed, performs a method in accordance with any one of claims 1 to 10.

12. A method for enabling a mobile node (83) supporting an intergeneration address conversion method to communicate next generation Internet protocol packets across a mobile network (100) supporting a previous generation Internet protocol, the method comprising:
sending an intergeneration relay assignment request to a previous generation home agent (91) for assigning an intergeneration relay to the mobile node,
receiving an intergeneration relay assignment response, the response comprising a previous generation address of an intergeneration relay (93) assigned to the mobile node, the intergeneration relay supporting the intergeneration address conversion method,
deriving a next generation address of the mobile node from a previous generation home address assigned to the mobile node using the intergeneration address conversion method,
encapsulating a next generation packet comprising the next generation address of the mobile node inside a previous generation packet,
sending the previous generation packet to the intergeneration relay previous generation address.

13. A method in accordance with claim 12, further comprising determining an intergeneration address conversion method supported by the mobile node and providing a corresponding intergeneration address conversion method identifier (51) in the intergeneration relay assignment request.

14. A method in accordance with claim 12 or 13, wherein the intergeneration relay assignment request is sent in a mobile node registration request (31) of a previous generation mobility protocol and the intergeneration relay assignment response is received in a mobile node registration response (33) of the previous generation mobility protocol.

15. A digital data storage medium encoding a machine-executable program of instructions that, when executed, performs a method in accordance with any one of claims 12 to 14.
